(19) Europäisches Patentamt
European Patent Office
Office européen des brevets

(11) **EP 2 063 120 A2**

(12) **EUROPEAN PATENT APPLICATION**
published in accordance with Art. 153(4) EPC

(43) Date of publication:
**27.05.2009 Bulletin 2009/22**

(51) Int Cl.:
***F03G 7/10*** *(2006.01)*

(21) Application number: **07805040.8**

(22) Date of filing: **28.03.2007**

(86) International application number:
**PCT/IB2007/052469**

(87) International publication number:
**WO 2008/023292 (28.02.2008 Gazette 2008/09)**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(30) Priority: **22.08.2006 GT 3822006**

(71) Applicant: **Lee Duarte, Fradique
010011 Guatemala (GT)**

(72) Inventor: **Lee Duarte, Fradique
010011 Guatemala (GT)**

(74) Representative: **Beyer, Andreas
Wuesthoff & Wuesthoff
Patent- und Rechtsanwälte
Schweigerstrasse 2
81541 München (DE)**

(54) **SYSTEM FOR EXPLOITING ENERGY DERIVED FROM THE ROTATION OF THE EARTH OR CREATION OF CYCLONES IN A CASING IN ORDER TO PRODUCE ENERGY**

(57) The invention is based on the principle relating to the formation of cyclones to produce electrical power that is environmentally-friendly, clean, inexhaustible and abundant to the extent that current consumption is insignificant. The invention makes use of the acceleration imparted by the earth to the fluid that passes transversely through the latitudes, directing same to the closest pole. The invention comprises a duct which can be straight, in the form of a doughnut (toroid) or have any geometrical shape, conforming to the principle that, when level in one of the hemispheres, the fluid is directed towards the pole in the case of the "straight" duct and rotated in the direction of rotation of the earth in the case of the doughnut. The initial movement is forced and subsequently accelerated and sustained by the rotational movement of the earth. As a result of said movement, the fluid drives the turbines which produce electricity.

TRANSOCEANIC TRANSPORTATION
WITH SUBMARINE CAPSULES
MOVED BY ROTATIONAL ENERGY FROM EARTH

FIGURE 20

**Description**

BACKGROUND (previous to achieve the discoveries and the invention)

Back in 1974, I was concerned with the idea of achieving "the energetic use of the rotation of the earth", so I studied by myself the Coriolis Effect, leaving me restleness and having no conclusion at that time. During 1982 to 1985 I was led to think on writing a book regarding the matter that North American and Canadian people are traveling on Earth at less velocity than Central Americans, due to the rotation of the earth. The book was going to give an explanation about their behavior, health and development just because people are traveling in different velocities. In 2001, I was aware that the movements of the ocean moves contrary to the rotation of the earth. I tried to search in scientific literature, but do not found scientific explanation regarding this phenomenon, and while going more deeply on this matter and giving a explanation to high and low tides and the moon's position, I established that there is a force or phenomenon, by now, science has not considered it, its effect, which is a gravitational attraction caused by the gravity center of the Earth-Moon System. Analyzing the translation period of the moon, almost 28 day; and the rotational period of Earth's rotation which is a revolution of 24 hours, we can see that this leaves to the Earth-Moon gravity center a relative rotational movement in opposite direction to Earth's rotation; this clearly establishes that if there is a plummet in any place of the Earth, such plummet is mainly attracted by Earth's gravity center and the gravity center of the Earth-Moon System, this Earth-Moon System with which gravity center has a movement of relative rotation near to 1,250 km./hour clearly establishes, that the plummet varies in a circular way, during 24 hours.

I discovered this phenomenon, which I called "*Fradiqueles*" (name of one of my children). When relating this with the Coriolis Effect, I noticed, that both effects, work opposite to Earth's rotational movement (maintaining the balance) then I wonder what's happening?.... if I overcome this two effects, I discovered that, practically, this is the principle of cyclones formation.

Cyclones are formed when overcoming the Coriolis and "Fradiquelees" effects, when air is heated and start to elevate, instead of obeying the normal movement, air starts to spin in an opposite way, because its rotational vector changes direction. Explanation given by the principle "Right Hand", which in Mechanics Engineer it is applied to vectors.

Studying the existing theories about cyclones formation, I just found explanations that in my opinion do not have enough scientific support. Therefore, I look for an explanation, which I describe above and is supported by the "Right-Hand" principle, known in the Mechanic Engineering. It could be said that these are the genes of the cyclones formation.

SYSTEM FOR EXPLOITING ENERGY DERIVED FROM THE ROTATION OF THE EARTH OR CREATION OF CYCLONES IN A CASING IN ORDER TO PRODUCE ENERGY

New theory on the formation of cyclone and tornadoes

Cyclones and tornadoes are formed when the winds are conditioned by the temperature changes caused by the Sun, which comes to dominate the force of the gravitational attraction of the Earth Center and the gravitational center of the Earth Moon system and this provokes that the winds do not move in the sense of the hands of the clock (talking about North Hemisphere); and they start to spin in counter sense of the clockwise, then the fluid takes the acceleration given by the Earth's rotation.

Any fluid moving from a latitude near to the equator toward a latitude near to the pole, it wins relative speed (air in the latitude near to the equator has not relative speed in that latitude, but when being transferred to the following latitude, it acquires a velocity due to the differential of velocity between both latitudes).

If we provoke that this transference to be made with a spin in a circular way (cyclical), the system "holds" itself because this fluid is accelerated by Earth's rotation. If we place a "*toroidal*" (doughnut figure) in any place of the planet, this has more potential energy in its "down" medium circle, than the energy of its "up" medium circle, in the North hemisphere (see figure #1) in case of South Hemisphere it is in the inverse. This means that half of the circumference near to equator has more energy than the other half far from it. Due to different velocities of the latitudes.

VARIABLE ACCELERATION FROM ROTATIONAL FORCE PROVIDED BY THE EARTH'S ROTATION

If we calculate the translation velocity of the equator latitude circumference, divided among the 24 hours of the rotation duration (circumference of equator/24 hours) it is 463 m/sec. In the poles, the velocity is zero, which means that if we go from the equator to the poles, the velocity is varying from kilometer to kilometer at a velocity of 0.04722 m/sec per kilometer. If we provoke a velocity to transfer an air from latitude towards another latitude, with a constant velocity of 10 m/second, we would have an acceleration of 0.000472 m/sec$^2$; which means:

$$0.04722 \text{ m/sec (km)} \times 0.010 \text{ km/sec} = 0.0004722 \text{ m/sec}^2$$

With this acceleration, an increase in the "translation velocity" is formed, which again provokes acceleration and so, the translation velocity and acceleration are increasing every time before the system stabilize itself.

From Figure #1, we can notice that there is an imbalance (stationary) of potential energy, which if the stationary energy brakes, it could establish a movement against the hands of the clock that at a beginning is accelerating, till it "stabilizes".

If air is pushed with a constant velocity from latitude 10 north toward the latitude 30° north, in a pipe this air have, when getting out the pipe, a major velocity than the constant velocity with which it was pushed; this velocity was gained due that the rotation velocity in the 10° north is greater than latitude 30° north (relative velocity); it has gained differential velocity equal to the difference of velocities of the 10° latitude velocity with relation to the 30° latitude, (without taking into account the friction caused in the pipes).

If we make a pumping in a toroidal tube of 200 km. and 6 m diameter, giving the fluid a 5 m/seconds; after having this velocity, it achieves an acceleration caused by the fluid own velocity when it pass through a latitude near the equator, toward latitude near to poles which has a velocity of 0.04722 m/seconds per km of distance between latitudes, this acceleration would be equal to 0.0002361 meters over seconds $^2$ (m/sec$^2$) with this acceleration caused by initial acceleration applied, will give a new major velocity than the 5 m/sec, achieving with this acceleration to obtain a variable velocity, which repeats again, obtaining variable velocity and a variable acceleration previous to the "System stabilizes".

A contribution to the fluid movement in a duct with a toroidal shape (doughnut figure) it is given by the left half of the doughnut, it works as a pump casing, that has a greater translation velocity that the fluid velocity flowing in the duct. This means, that the fluid getting into the casing, goes out at the end, with an equivalent velocity to the corresponding latitude velocity, by the latitude of that extreme of the casing.

**SYSTEM FOR EXPLOITING ENERGY DERIVED FROM THE ROTATION OF THE EARTH OR CREATION OF CYCLONES IN A CASING IN ORDER TO PRODUCE ENERGY.**

**1. <u>Basic Theory</u>:**

If over a spinning disc in a transversal axis, we place a "little" ring stocked near to its circumference, over it is a sphere; the sphere starts with a swinging movement having no rotation; if then we apply a circular push to the sphere, this spins and continue spinning while the disc spins.

There are, mainly, two effects or forces in the Nature opposing, whereby elements moving in the Earth's surface do not move in the direction (sense) of the rotational force; these effects are: the "Coriolis" Effect and the "Gravitational" Effect (effect that I name Fradiquelees).

"Coriolis effect": it is an inertial effect, when the elements oppose to change its current status.

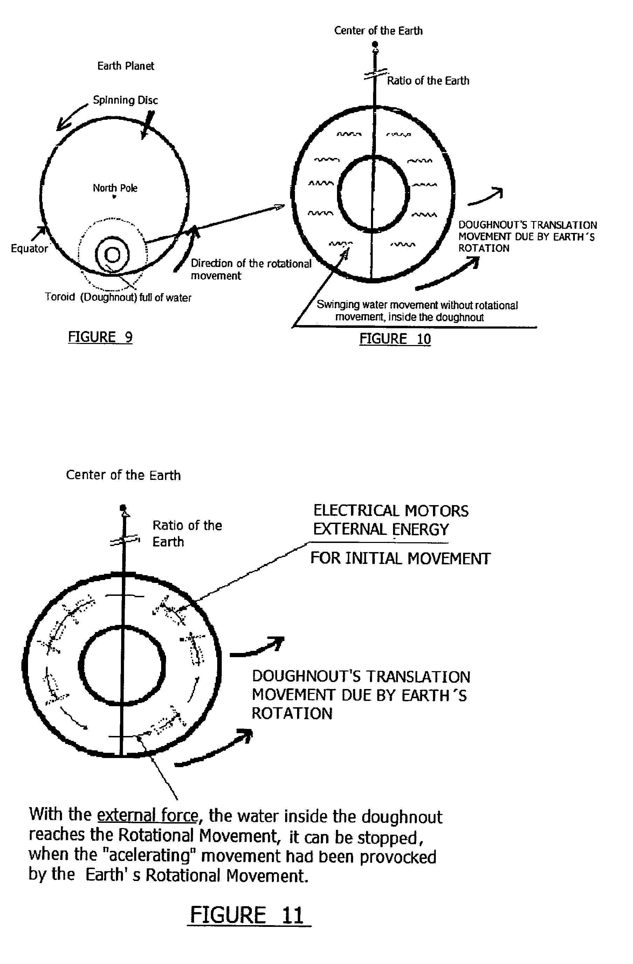

<u>Gravitational or Fradiquelees Effect</u>: The gravity center of the Earth-Moon System is always spinning opposite direction (sense) to Earth's rotation, by approximately a velocity of one thousand two hundred fifty kilometers per hour, which causes the water "spins" in a opposite direction (sense) to the Earth's rotation, force that has an attraction to all bodies which are in the "Earth Surface" and also causes to spin to some of the elements that are in movement; like the "Coriolis Effect", attracting both to the same direction (sense). When the movements in the earth surface are normal (air movements, sea movements, drain water movements, etc.). (See Figures Nos. 10 and 11).

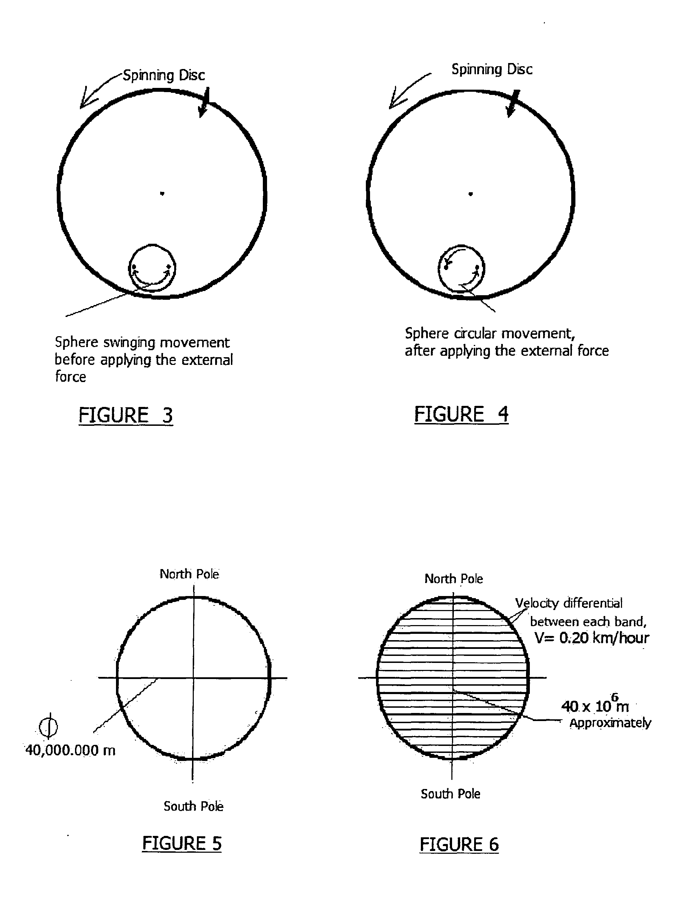

2. If we assume that the earth is a sphere and is taken as a 40 x 10$^6$ meters sphere (measure of the equator diameter) and supposing that the Earth is a sphere as such, even though in the reality the circumference going through the poles is smaller than the circumference of the equator); calculating the velocity with which the parallels will vary, taking them as widely separated bands 1 kilometer from equator to the poles, it will give a velocity differential of approximately 0.20 Km/hour per kilometer. (See figures Nos. 3, 4, and 5).

3. If we assume ideally that earth is like a group of bands, which each one goes into a different velocity (wide of each band: 1 kilometer).

$$\text{Velocity in the equator} = \frac{40,000 \text{ km}}{24 \text{ hours}} = 1666 \text{ km/hour}$$

4. If we manage to do that one thing (gases, liquids, solids or a combination of these) travel from one band to another, <u>this band has the capacity, without swooning, of transporting whatever it is given, it takes one "thing" to the same</u>

velocity, whether it is light or heady, (because of the magnitude of earth forces). When we walk from one band to another, the surrounding air and we are changing velocity in direction (sense), in which the Earth's bands are going.

5. In the parallel that is 1 kilometer to the equator, this band travels around 1666 km/hour in the rotational direction (sense): which is in the parallel to 1000 km from equator, goes 1466 km/hour, that a velocity differential of 200 km/hour. (See figure No. 6).

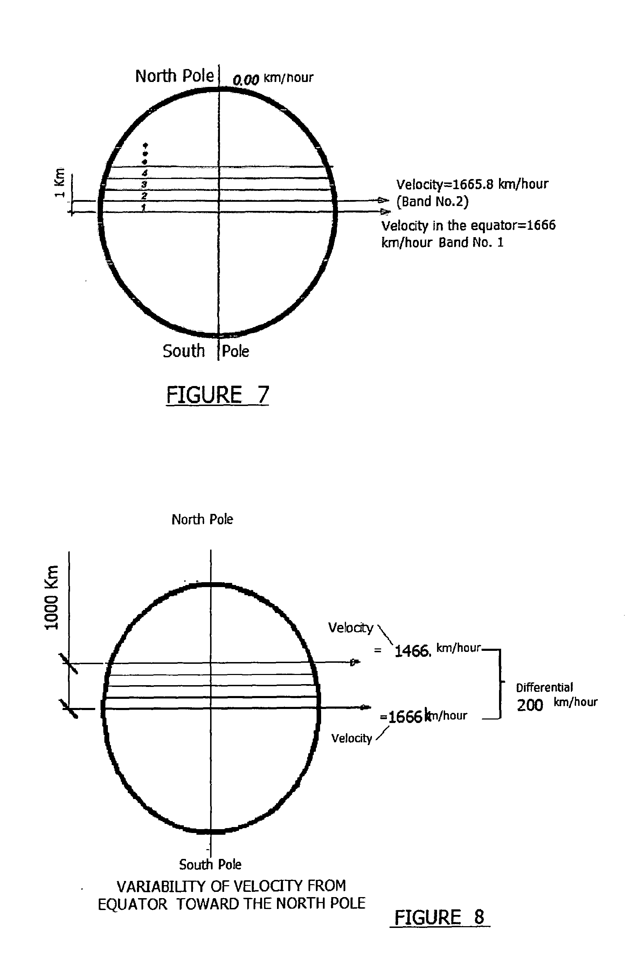

6. If we place an ideal "*toroide*" (doughnuts figure)* in the position between the equator latitude toward the North Pole (to level) full of water, this water stays in uniform movement with the earth rotation, if due to "external" force to earth movement, it gives an impulse to the water contained inside the doughnut to move, to this movement the Coriolis Force opposes (opposition of any element to change from its current status, static or in a determined velocity). Therefore, the "external" force must be greater to the *Coriolis* and *Fradiquelees* effects, to attain the movement in the counter sense to clockwise. (See figure No. 7,8,9,10,11).

* If exit any figure, in which the principle be the same, where a close circuit can also occur, as in the case of an "8" (eight) or an spiral that then closes., during the tests we performed, we found out that the "*toroidal*" (doughnut) figure was more efficient.

7. If our "toroide" (doughnut figure) is in the North hemisphere and the water movement provoked goes in the counter sense to clockwise, we have overcome the two forces opposing the Earth's rotational movement.; we have reached to be in concordance with the Earth's Rotation and with this, we achieve a great accelerant movement.

8. If we accomplish to overcome the *Coriolis* and *Fradiquelees* forces with a pumping, we will achieve the liquid placement and then initiates the accelerant movement by the rotational forces of the planet (cyclones principles) will develop a greater velocity than the initial one that was used to provoke the movement

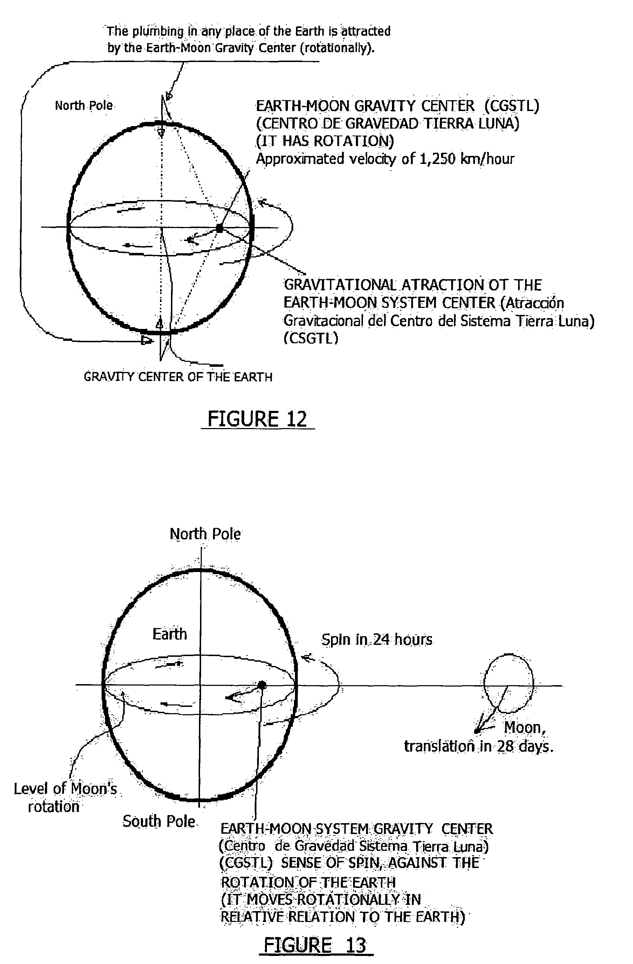

If the toroide duct (or doughnut) is ideal, (meaning that this has no friction), we will gain a velocity of about 400 km/hour, inside the duct, it will be a double of differential of points A and B, (See figure 12).

If we consider the friction, we will have less movement.

9. Estimation of the necessary power to attain the initial movement (external power to apply), in a 500 km diameter doughnut, with a duct of 10 meters of diameter: initial movement provoked: 2 km/hour.

If the doughnut is not at level, consider the heights for the pumping and the length of the duct.

| Tube diameter | Fluid/Vel. | Friction ft/100 ft PVC "smooth" duct |
|---|---|---|
| 30" | 1.82 ft/sec | 0.06 |
| 394" | 1.82 ft/sec | x |

$$0.06\frac{*30}{394} * \frac{(1.82)^2}{(1.82)^2} = 0.004568 \text{ ft} / 100 \text{ ft}$$

$$GPM = ((\pi*d^2)/4) * 33.3 \text{ mts/min} * \frac{1000 \text{ lt}}{1 \text{ m}^3} * \frac{GI}{3.78\text{lt}} = 691,900 \text{ GPM}$$

$$HP = \frac{691,900 \text{ GPM} * 0.004568 \text{ ft}/ 100\text{ft} * 0.5 * 10^6 \text{ mts} * \pi * 3.3 \text{ ft} / \text{mt}}{3960 * 0.70}$$

$$HP = 59,103 \text{ HP}$$

**External energy to apply (2 km/hour) = 59,103 HP**

**External energy to apply (2 km/hour) $\cong$ 60,000 HP**

10. Analyzing the potential kinetic energy of fluid's total volume inside the doughnut, we have:

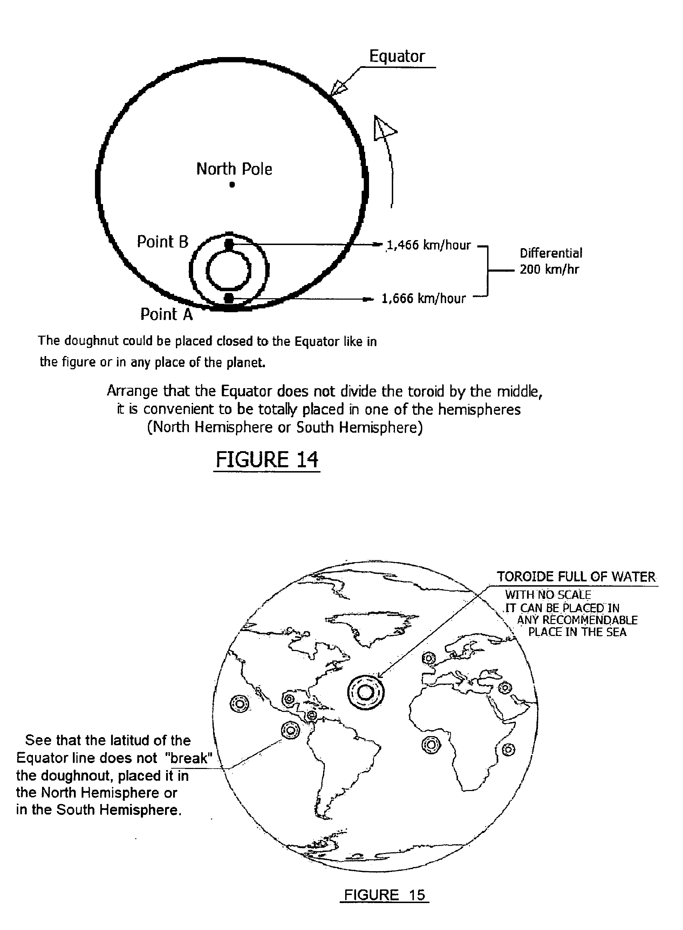

10.1 In quadrant I and II the forces of the fluid direction are opposite to quadrants III and IV: but quadrants III and IV are greater since they are closer to equator (where velocity is greater). (See figure No. 14)

10.2 Analyzing the energy in the quadrants, we have:

$$E_I = \tfrac{1}{2} * m_I * V_I^2$$

$$E_{II} = \tfrac{1}{2} * m_{II} * V_{II}^2$$

$$E_{III} = \tfrac{1}{2} * m_{III} * V_{III}^2$$

$$E_{IV} = \tfrac{1}{2} * m_{IV} * V_{IV}^2$$

$$m_I = m_{II} * m_{III} * m_{IV} = \tfrac{1}{4} * M \text{ Total of the doughnut}$$

$$VI, VII, VIII, VIV = \text{Average velocities to be considered.}$$

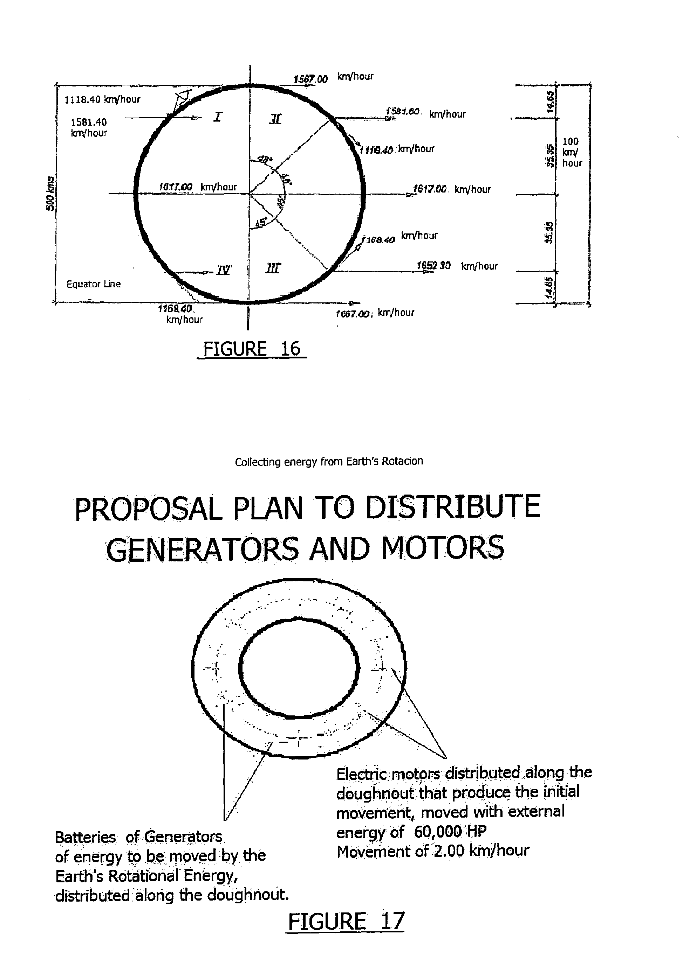

11. Work pressure in the doughnut duct: the work pressure in the doughnut is low, because it is a circular system and the pressure can be designed evenly distributed in all system, with which we can attain to work with a convenient differential pressure, being the doughnut immersed in a convenient level on the sea. (See figure No. 17).
12. Some ways to exploit the energy to be produced:

12.1 <u>To produce electricity:</u> The system that has been considered to exploit the existing energy is: To use a part of the energy to produce a fluid movement and the other one, to move generators to produce electric energy. (See figures 15, 16 and 17 ).

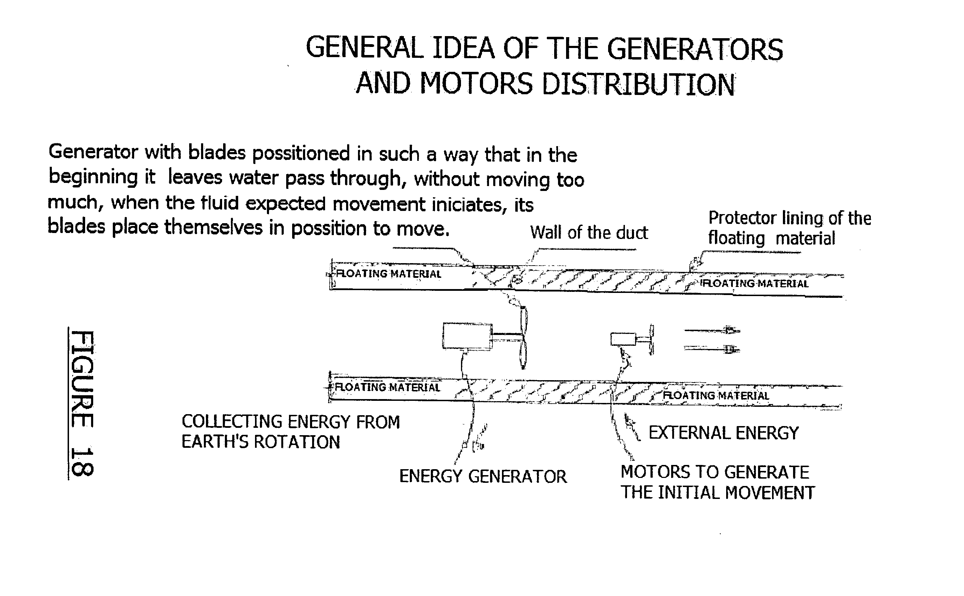

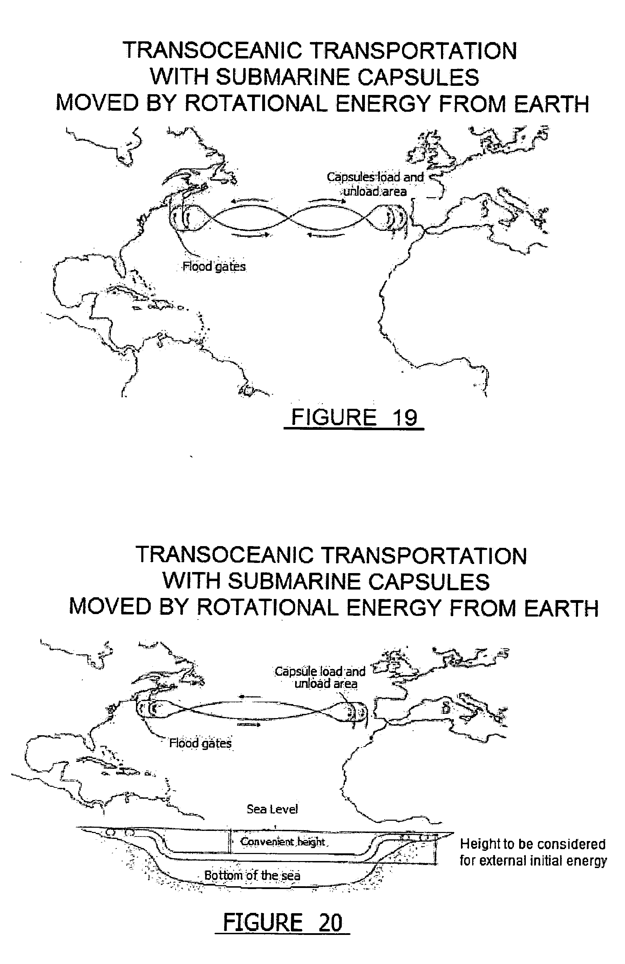

12.2 <u>For transoceanic transportation with submarine capsules, moved by the "Earth's Rotational Energy":</u> Trans-atlantic Transportation from port to port, through one outgoing tube and other incoming tube with submarine-capsules that can or cannot have its own drive. The idea is to take advantage of the submarine principle; the weight of the load would be held by the water to flow and it's transportation by the water movement; this moved by the "Earth's rotational movement". To start the Submarine-capsule journey, will be through two or more entries to the system; the submarine capsule floats with the load, when throwing off "almost all" water counterbalance.
When the submarine-capsule loads with counterbalance water, it sinks and keep sank in the water to flow.
The submarine-capsule can be conditioned to transport containers and passengers, it will count with oxygen equipment, as actually submarines work. The limit of velocity is subject to the capacity of maneuver. (See figures 18, 19 and 20).

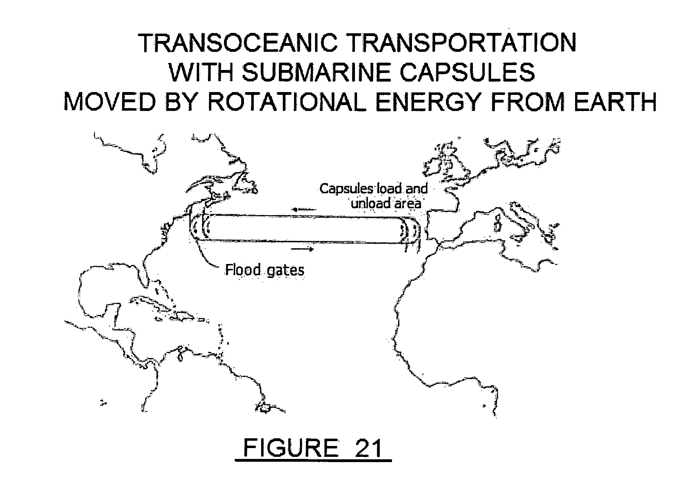

12.3 Transportation of fluids from a place to another: To transport any kind of fluid, per example "sweet" water from a place to another (having a system not totally closed circuit or else open, controlled, do not allow to lose the fluidity of the system (see figure 21 and 22).

**Claims**

1. "System for Exploiting Energy derived from the Rotation of the Earth or Creation of Cyclones in a casing in order to produce energy" it is **characterized by**: a) to place a doughnut shape pipeline (torus or toroidal), it may be the pipeline enlarged in some parts, or any geometrical figure or not; from a pipeline with closed circuit at any spot of terrestrial surface (in water and/or on earth) preferably in level, following the curvature of Earth body to avoid losses, because of frictions; in the water case, it may be an open circuit, if the fluid to flow is water of the contour; considering the strength required by the fluid, in order to go out from the pipeline and to direct it to the same way to the movement of the water in that location, it may be submerged into the ocean to certain depth (not in the sea bed) to maintain it's level or almost it, reaching with the previous, to provoke inside the pipeline, a constant fluently movement to exploit the energy from the Earth's rotation or satellite, or in any celestial body in space, because of the defeat of the Coriolis Effect and the Gravitational Effect b) The use of any figure type, which also, forms a close circuit; like as in case of an eight (8) or an spiral figure, that then closes, to translate any fluid, can be: liquid, solid, gaseous, or any combination of them. c) The exploitation of any fluid movement, which can be forced by bombs or any other way (mechanic, hydraulic, electric) or particularly moved by the energy of a rotation force of Earth; it may be utilized to carry submarine capsules, submerged on a fluid where these capsules may flow to translate. These capsules may have or not an own impulsion.

**2.** "System for Exploiting Energy derived from the Rotation of the Earth or Creation of Cyclones in a casing in order to produce energy", according to Claim 1, **characterized** because: Energy is obtained by a doughnut or toroid pipeline, it can be enlarged in any of its parts or from a circular pipeline or any geometric figure or not, with open or close circuit, if it is on the same environment with the fluid to flow. Accordingly to the previous concept founded on the theory: that gravitational center of Earth-Moon System, it's always spinning against in of the Earth's rotational movement, whereby, the water is spinning in opposite way to the Earth's rotational movement; this force attracts rotationally to all bodies, which are on terrestrial surface (water or ground), causing that some of these bodies which are in movement to spin to the same as Coriolis Effect and Gravitational Effect, both, to the same direction; when the movements on the terrestrial surface are normal; whereby, if we provoke, with an external force, which obtains that the fluid moves in opposite direction which is provocked by Coriolis and Gravitational Effects of the gravitational center (Earth-Moon); we acquire a major movement at the expense of rotational force of a Planet on celestial body.

**3.** "System for Exploiting Energy derived from the Rotation of the Earth or Creation of Cyclones in a casing in order to produce energy", according to Claim 1, **characterized** whereby presence of a exterior force (excitatriz=start) provokes the flow of the fluid on the mentioned pipeline, doughnut or toroid; the pipeline may be enlarged in some parts; or any geometrical figure or not; wherein passing by a band of the Earth or from a celestial body, to another band (velocity differential by the distance to Ecuador), this band has the capacity without discouraged to carry whatever it is collocated to be transported, with the same velocity, even if is light or heavy, (because of the magnitude of the strengths of the Earth's forces).

**4.** "System for Exploiting Energy derived from the Rotation of the Earth or Creation of Cyclones in a casing in order to produce energy" according to Claim 1, it is **characterized** because if it's settled a pipeline as a doughnut shape or toroid, the pipeline may be enlarged in some parts or any shape, or geometrical figure or not), ideally situated between the equatorial parallel and the north parallel, at the sea level, following the curvature of the celestial body, or submerged into a determined height (altitude), and filled with water, this water will be in uniform movement according to Earth's rotation, but when applying an external force to the terrestrial movement, it will produce movement to the restrained water inside the pipeline, to this movement the force of the Coriolies Effect opposes, therefore, the external force must be bigger than the Coriolis Effect force and Gravitational Effect forces to obtain so that the movement of the water will move in counter way to the clockwise. In a rather case, if it is situated between the equatorial parallel and the South parallel, it is positioned in the sea level, or submerged to certain height; the movement will be at the same direction to the clockwise.

**5.** "System for Exploiting Energy derived from the Rotation of the Earth or Creation of Cyclones in a casing in order to produce energy" according to Claim 4, it is **characterized** because when applying an external force, to the terrestrial movement, that results in the opposite way to the rotation; the exploitation of energy will be minor than if it is spinning with the same direction to the rotation way of the celestial body.

**6.** "System for Exploiting Energy derived from the Rotation of the Earth or Creation of Cyclones in a casing in order to produce energy" according to Claim 4, it is **characterized** because such duct, of any form may be geometric figure or not, may be applicable wherever it has a closed circuit; as in the closed spiral case, or the eight case (8); or in an open system with a correct mechanism that does not allows the fluid lose their fluidity; having an open or semi-open mechanism in a controlled system, to let enter the same amount of fluid that goes out at the other extreme, maintaining the movement of the fluid into the pipeline.

7. "System for Exploiting Energy derived from the Rotation of the Earth or Creation of Cyclones in a casing in order to produce energy", according to Claim 4, it is **characterized** because when using principle to defeat the Coriolis and Gravitational Effects, can translate submarines capsules to transport such submarines capsules taking advantage of the fluidity of a fluid environment.

Velocity 1

Velocity 2 — Velocity 2

DOUGHNOUT
PART WITH
MAYOR
VELOCITY

Velocity 3
Mayor Potential
Energy

Velocity 3

Velocity 4 > Velocity 1

Velocity 3 > Velocity 2

Velocity 4

CLOSER SIDE TO
EQUATOR

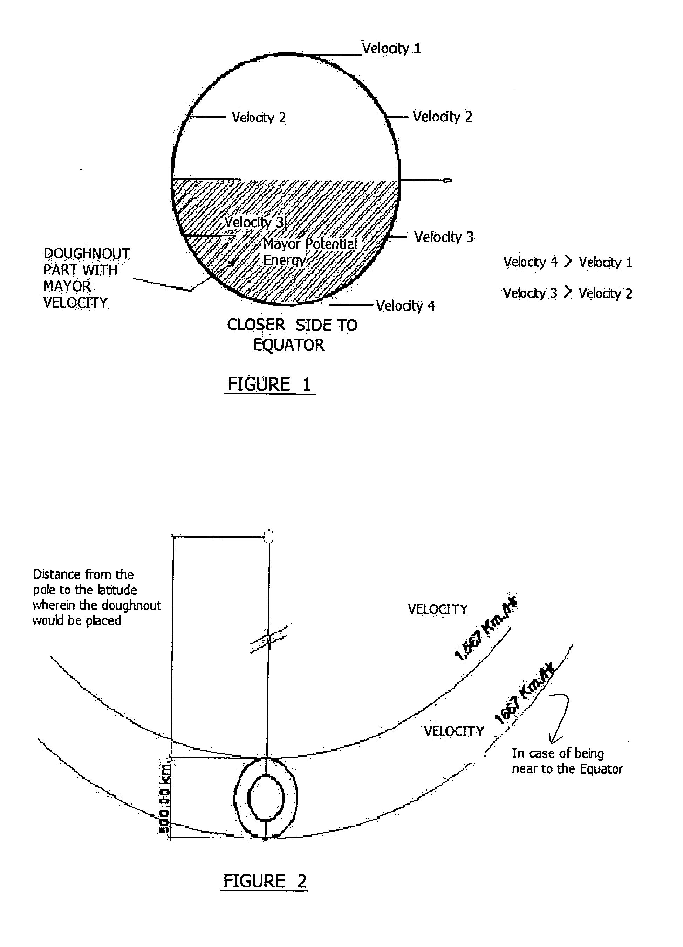

FIGURE 1

Distance from the
pole to the latitude
wherein the doughnout
would be placed

VELOCITY
1,557 Km/H

VELOCITY
1,667 Km/H

In case of being
near to the Equator

500.00 km

FIGURE 2

Spinning Disc

Sphere swinging movement
before applying the external
force

FIGURE 3

Spinning Disc

Sphere circular movement,
after applying the external force

FIGURE 4

North Pole

South Pole

$\phi$
40,000.000 m

FIGURE 5

North Pole

Velocity differential
between each band,
V= 0.20 km/hour

$40 \times 10^6$ m
Approximately

South Pole

FIGURE 6

FIGURE 7

VARIABILITY OF VELOCITY FROM
EQUATOR TOWARD THE NORTH POLE

FIGURE 8

FIGURE 9

FIGURE 10

With the external force, the water inside the doughnout reaches the Rotational Movement, it can be stopped, when the "acelerating" movement had been provocked by the Earth' s Rotational Movement.

FIGURE 11

The plumbing in any place of the Earth is attracted
by the Earth-Moon Gravity Center (rotationally).

North Pole

EARTH-MOON GRAVITY CENTER (CGSTL)
(CENTRO DE GRAVEDAD TIERRA LUNA)
(IT HAS ROTATION)
Approximated velocity of 1,250 km/hour

GRAVITATIONAL ATRACTION OT THE
EARTH-MOON SYSTEM CENTER (Atracción
Gravitacional del Centro del Sistema Tierra Luna)
(CSGTL)

GRAVITY CENTER OF THE EARTH

## FIGURE 12

North Pole

Earth

Spin in 24 hours

Moon,
translation in 28 days.

Level of Moon's
rotation

South Pole

EARTH-MOON SYSTEM GRAVITY CENTER
(Centro de Gravedad Sistema Tierra Luna)
(CGSTL) SENSE OF SPIN, AGAINST THE
ROTATION OF THE EARTH
(IT MOVES ROTATIONALLY IN
RELATIVE RELATION TO THE EARTH)

## FIGURE 13

Equator

North Pole
•

Point B

1,466 km/hour

Differential
200 km/hr

1,666 km/hour

Point A

The doughnut could be placed closed to the Equator like in
the figure or in any place of the planet.

Arrange that the Equator does not divide the toroid by the middle,
it is convenient to be totally placed in one of the hemispheres
(North Hemisphere or South Hemisphere)

## FIGURE 14

TOROIDE FULL OF WATER

WITH NO SCALE
IT CAN BE PLACED IN
ANY RECOMMENDABLE
PLACE IN THE SEA

See that the latitud of the
Equator line does not "break"
the doughnout, placed it in
the North Hemisphere or
in the South Hemisphere.

## FIGURE 15

1568.00 km/hour

1118.40 km/hour

1581.40 km/hour

1581.60 km/hour

1118.40 km/hour

1617.00 km/hour

1617.00 km/hour

1168.40 km/hour

1652.30 km/hour

Equator Line

1168.40 km/hour

1668.00 km/hour

500 kms

14.65

100 km/ hour

35.35

35.35

14.65

I

II

IV

III

## FIGURE 16

Collecting energy from Earth's Rotacion

# PROPOSAL PLAN TO DISTRIBUTE GENERATORS AND MOTORS

Electric motors distributed along the doughnout that produce the initial movement, moved with external energy of 60,000 HP
Movement of 2.00 km/hour

Batteries of Generators of energy to be moved by the Earth's Rotational Energy, distributed along the doughnout.

## FIGURE 17

# GENERAL IDEA OF THE GENERATORS
## AND MOTORS DISTRIBUTION

Generator with blades possitioned in such a way that in the
beginning it leaves water pass through, without moving too
much, when the fluid expected movement iniciates, its
blades place themselves in possition to move.

Wall of the duct

Protector lining of the
floating material

FLOATING MATERIAL

FLOATING MATERIAL

FLOATING MATERIAL

FLOATING MATERIAL

COLLECTING ENERGY FROM
EARTH'S ROTATION

EXTERNAL ENERGY

ENERGY GENERATOR

MOTORS TO GENERATE
THE INITIAL MOVEMENT

FIGURE 18

EP 2 063 120 A2

# TRANSOCEANIC TRANSPORTATION
# WITH SUBMARINE CAPSULES
# MOVED BY ROTATIONAL ENERGY FROM EARTH

Capsules load and unload area

Flood gates

## FIGURE 19

# TRANSOCEANIC TRANSPORTATION
# WITH SUBMARINE CAPSULES
# MOVED BY ROTATIONAL ENERGY FROM EARTH

Capsule load and unload area

Flood gates

Sea Level

Convenient height

Height to be considered for external initial energy

Bottom of the sea

## FIGURE 20

# TRANSOCEANIC TRANSPORTATION
# WITH SUBMARINE CAPSULES
# MOVED BY ROTATIONAL ENERGY FROM EARTH

Capsules load and unload area

Flood gates

## FIGURE 21